# EUROPEAN PATENT APPLICATION

(11) **EP 2 000 059 A1**
(43) Date of publication of application: **10.12.2008**
(21) Application number: 08015718.3
(22) Date of filing: 17.01.2005
(51) Int. Cl.: A47J 25/00, B26B 3/00

(54) **Mango slicer**

(30) Priority: 11.01.2005 US 905568
(62) Divisional of application: 05702277.4
(71) Applicant: Helen of Troy Limited, St. Michael (BB)
(72) Inventor: Walzak, Kevin Leo, Syracuse, NY 13205 (US); Lee, Alexander, New York, NY 10001 (US); Perry, Marco, Brooklyn, NY 11231 (US)
(74) Representative: Hauck Patent- und Rechtsanwälte

(57) **Abstract**

A slicer (20) for slicing a fruit or vegetable, such as, for example, a mango fruit, comprising a slicing structure (21) having a central cutter (22) with a generally oblong shape and first (23) and second (24) cutters extending outwardly from the central cutter and transversely disposed relative to each other, the central cutter and the first and second cutters respectively having cutting edges (25) for slicing the fruit or vegetable, and a handle structure (30) coupled to the first and second cutters.

## Description

### CROSS REFERENCE TO RELATED APPLICATION

The present application claims the benefit of the filing date of co-pending U.S. Provisional Application No. 60/535,648, filed January 12, 2004.

### BACKGROUND OF THE INVENTION

The present application relates generally to kitchen utensils and, more particularly, to kitchen utensils for de-pitting or de-seeding and slicing fruits such as, for example, mangos.

Kitchen utensils adapted to cut or slice fruit or vegetables, while simultaneously coring such fruit or vegetables, are well-known. For example, US Patent No. 4,490 912 discloses a pineapple cutter having a circular central cutter for coring a pineapple and a plurality of outwardly extending cutters for simultaneously slicing the fruit. However, such cutters cannot be efficiently utilized on fruits or vegetables that have oblong or irregularly shaped pits or seeds, such as found in mangos and other fruits.

### SUMMARY OF THE INVENTION

The present application discloses a slicer for slicing and de-pitting or deseeding a fruit or vegetable, such as, for example, a mango. The slicer includes a slicing structure having a central cutter that has a generally oblong shape and two outwardly extending longitudinal cutters coupled to the central cutter. The central cutter and the outwardly extending cutters each have a keen edge adapted to cut or slice the fruit or vegetable. A handle structure is coupled to the first and second cutters and may include first and second handles formed of an elastomeric material.

It will be appreciated that, due to the generally oblong shape of the central cutter, when the slicer disclosed in the present application is used to slice a fruit, such as a mango, the central cutter substantially strips the fruit's flesh from the internal seed, while the longitudinal cutters slice the fruit generally in half.

### BRIEF DESCRIPTION OF THE DRAWINGS

For the purpose of facilitating an understanding of the subject matter sought to be protected, there is illustrated in the accompanying drawings embodiments thereof, from an inspection of which, when considered in connection with the following description, the subject matter sought to be protected, its construction and operation, and many of its advantages, should be readily understood and appreciated.
FIG. 1 is a top plan view of an embodiment of the slicer of the present application.
FIG. 2 is a side elevation view of the slicer of FIG. 1.
FIG. 3 is a top plan view of another embodiment of the slicer of the present application.
FIG. 4 is a perspective view of the slicer of FIG. 3.
FIG. 5 is a side elevation view of the slicer of FIG. 3 taken along line 5-5.
FIG. 6 is a side elevation view of the slicer of FIG. 3 taken along line 6-6.
FIG. 7 is a top plan view of another embodiment of the slicer of the present application.
FIG. 8 is a perspective view of the slicer of FIG. 7.
FIG. 9 is a side elevation view of the slicer of FIG. 7 taken along line 9-9.
FIG. 10 is a side elevation view of the slicer of FIG. 7 taken along line 10-10.

### DETAILED DESCRIPTION OF THE INVENTION

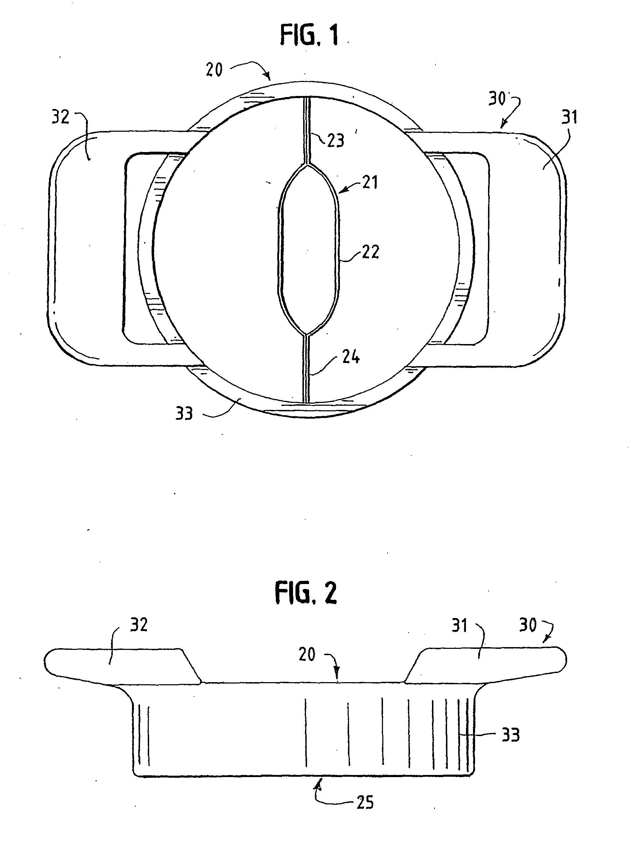

In an embodiment, the slicer of the present application is adapted to cut or slice and de-pit or de-seed fruits and vegetables having oblong pits or seeds, such as, for example, mango-like fruits. Referring to Figs. 1 and 2, an embodiment of the slicer of the present application, generally referred to as numeral 20, is shown. The slicer 20 includes a central slicing structure 21 having a generally oblongly shaped central cutter 22 and a first longitudinal cutter 23 and a second longitudinal cutter 24 extending outwardly from the central cutter 22. In an embodiment, the first and second cutters 23, 24 are transversely disposed relative to each other and the central cutter 22. The central cutter 22 and first and second cutters 23, 24 each have a cutting edge 25 disposed on a bottom side of the slicer 20 and which are adapted to cut or slice fruits and vegetables. The cutting edge 25 may include a keen edge adapted to slice or cut fruits and vegetables. In an embodiment, the cutting edge 25 is formed of stainless steel. In another embodiment, the central cutter 22 and the first and second cutters 23, 24 are formed of stainless steel.

In an embodiment, the oblong shape of the central cutter 22 is elliptical, thereby defining major and minor axis in relation to the ellipse. In an embodiment, the length-to-width ratio, or major-to-minor axis ratio, is between about 1.6 to about 3.8. m another embodiment, the length of the ellipse, along the major axis, is about 50 mm to about 75 mm, and the width of the ellipse, along the minor axis, is between about 20 mm to about 30 mm.

The slicer may also include a handle structure 30 coupled to respective distal ends of the first and second cutters 23, 24. The handle structure 30 includes first and second handles 31, 32, which may be formed of an elastomeric material. In an embodiment, the handle structure 30 includes a central body 33 that has a substantially circular shape wherein the first and second handles 31, 32 are disposed transversely relative to each other and substantially parallel to the major axis of the elliptical shape and are integrally coupled to the central body 33. In an embodiment, the central body 33 is formed of a plastic.

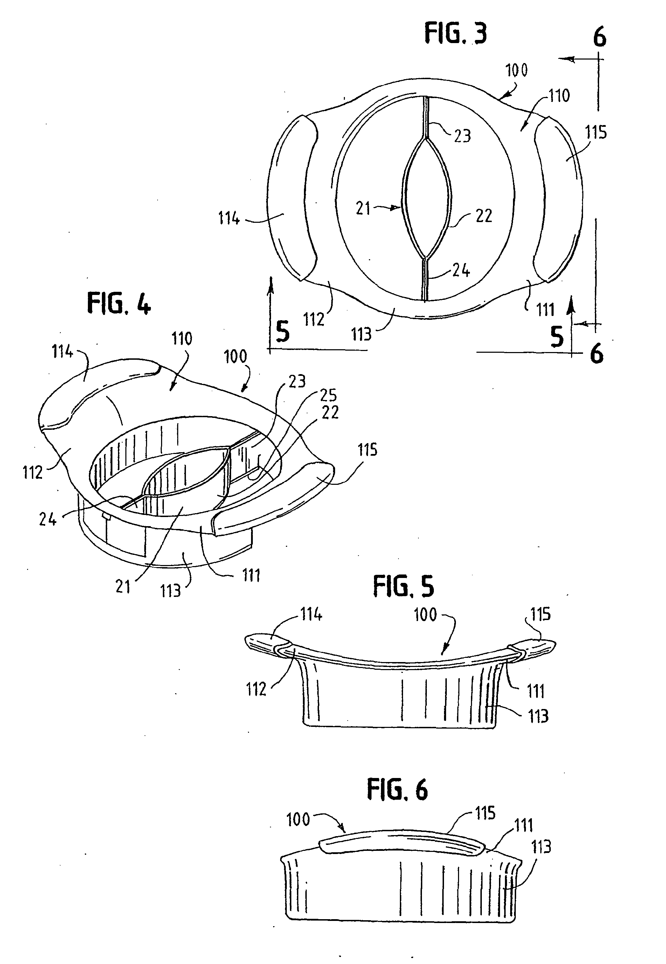

Referring now to Figs. 3-6, another embodiment of the sheer of the present application, generally depicted as numeral 100, is shown, with substantially like components as the previously described embodiments shown with like numerals. Handle structure 110 may include first and second handles 111, 112 integrally coupled to a central body 113. The first and second handles 111, 112 and the central body 113, may be formed of a plastic material. In an embodiment, the first and second handles 111, 112 may include respective handle portions 114, 115 formed of an elastomeric material. The central body 113 may be coupled to respective first and second distal ends of the first and second cutters 23 , 24, so that the first and second handles 111, 112 are disposed substantially parallel to the major axis of the oblongly shaped central cutter 22.

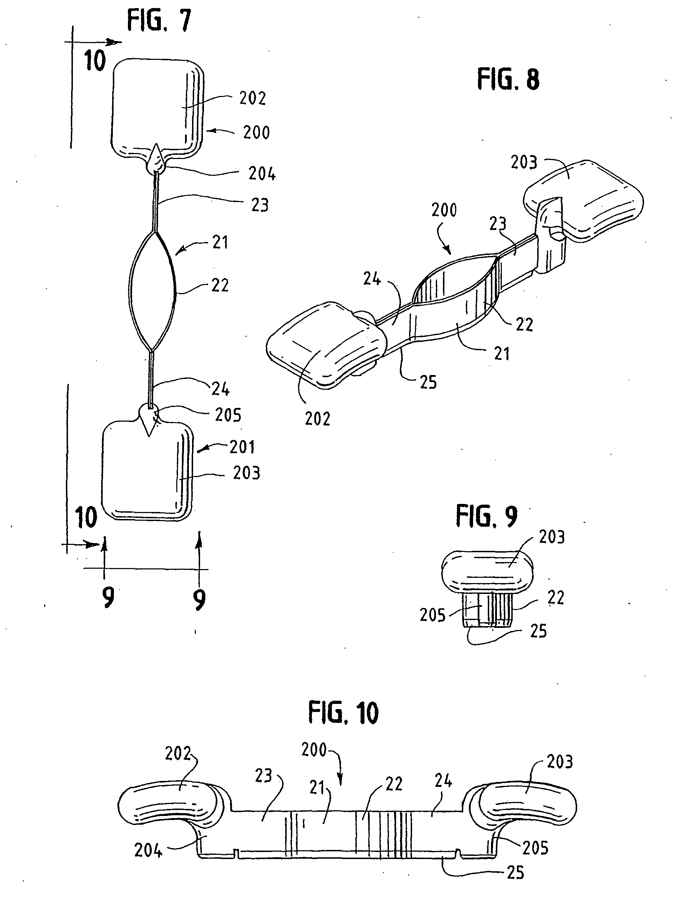

Referring to Figs. 7-10, another embodiment of the slicer of the present application, generally depicted as numeral 200, is shown, with substantially like components as the previously described embodiments shown with like numerals. Handle structure 201 may include first and second handles 202, 203, coupled to respective distal ends of the first and second cutters 23, 24 with respective upstanding first and second legs 204, 205. In an embodiment, the first and second handles 202, 203 are formed of an elastomeric material. In an embodiment, the first and second legs 204, 205 are formed of a plastic material. In another embodiment, the first and second legs 204, 205 are integrally formed with the first and second cutters 23, 24.

It will be appreciated that in all of the embodiments of the present application, when a fruit having a seed or pit, such as, for example, a mango-like fruit, is positioned substantially centrally relative to the central cutter 22 and adjacent to the keen edges 25, and a force directed towards the fruit is applied to the first and second handles, the keen edges 25 cut through the fruit wherein the central cutter 22 substantially strips or removes the flesh of the fruit from the internal seed or pit and the first and second cutters 23, 24 substantially simultaneously slice the fruit generally in half.

A method of removing a seed from a mango-like fruit is also provided. In an embodiment, the method includes providing a stainless steel slicing structure having a substantially elliptically shaped central cutter and first and second outwardly extending cutters disposed transversely relative to each other and extending outwardly from the central cutter, the central cutters and the first and second cutters each have a keen edge. The method further includes providing a handle structure having first and second handles and being coupled to the first and second slicers, and positioning the fruit generally centrally relative to the central cutter and adjacent to the keen edges, and thus causing a force to be applied to the handles towards the fruit, thereby causing the keen edges to penetrate the fruit to remove the fruit from the seed while simultaneously cutting the fruit generally in half.

The matter set forth in the foregoing description and accompanying drawings is offered by way of illustration only and not as a limitation. While particular embodiments have been shown and described, it will be apparent to those skilled in the art that changes and modifications may be made without departing from the broader aspects of applicants' contribution. The actual scope of the protection sought is intended to be defined in the following claims when viewed in their proper perspective based on the prior art.

### SUMMARY OF FURTHER EMBODIMENTS

1. A device for removing a seed of a mango-like fruit comprising: a stainless steel slicing structure having a substantially elliptically shaped central cutter and first and second cutters transversely disposed relative to each other and extending outwardly from the central slicer substantially parallel to a major axis of the elliptical shape, the central cutter and the first and second cutters each having a keen edge for slicing the fruit; and a handle structure coupled to respective first and second distal ends of the first and second cutters and having first and second handles; wherein when the fruit is positioned substantially centrally relative to the central cutter and adjacent to the keen edges and a force directed towards the fruit is applied to the first and second handles, the keen edges cut through the fruit and the central cutter substantially strips the fruit from the seed and the first and second cutters slice the fruit generally in half.
2. The device as claimed in embodiment 1 wherein the elliptical shape has a length-to-width ratio of between about 1.6 to about 3.8.
3. The device as claimed in embodiment 1 wherein the elliptical shape has a length of about 50 mm to about 75 mm, along a major axis thereof, and a width of about 20 mm to about 30 mm, along a minor axis thereof.
4. The device as claimed in embodiment 1 wherein the first and second handles are formed of an elastomeric material.
5. The device as claimed in embodiment 1 wherein the handle structure includes a central body having a substantially circular shape wherein the first and second elongated handles are disposed transversely relative to each other and substantially parallel to a major axis of the elliptical shape and integrally coupled to the central body.
6. The device as claimed in embodiment 1 wherein the first and second handles are respectively coupled to the first and second cutters.
7. A method of removing a seed from a mango-like fruit comprising: providing a stainless steel slicing structure having a substantially elliptically shaped central cutter and first and second outwardly extending cutters transversely disposed relative to each other and extending outwardly from the central cutter, the central cutters and the first and second cutters each having a keen edge; providing a handle structure having first and second handles and being coupled to the first and second slicers; positioning the fruit generally centrally relative to the central cutter and adjacent to the keen edges; and causing a force to be applied to the handles towards the fruit, thereby causing the keen edges to penetrate the fruit to remove the fruit from the seed.

## Claims

1. A slicer for slicing a fruit or vegetable comprising: a slicing structure having a central cutter with a generally oblong shape and first and second cutters extending outwardly from the central cutter and transversely disposed relative to each other, the central cutter and the first and second cutters respectively having cutting edges for slicing the fruit or vegetable; and a handle structure coupled to the first and second cutters.

2. The slicer as claimed in claim 1 wherein the generally oblong shape is substantially elliptical.

3. The slicer as claimed in claim 2 wherein the oblong shape has a length- to-width ratio of between about 1.6 to about 3.8.

4. The slicer as claimed in claim 2 wherein the oblong shape has a length of about 50 mm to about 75 mm, along a major axis thereof, and a width of about 20 mm to about 30 mm, along a minor axis thereof.

5. The slicer as claimed in claim 1 wherein the slicer structure is formed of stainless steel.

6. The slicer as claimed in claim 1 wherein the handle structure includes a central body having a substantially circular shape and first and second elongated handles disposed transversely relative to each other and substantially parallel to a major axis of the oblong shape and integrally coupled to the central body.

7. The slicer as claimed in claim 6 wherein the first and second handles are formed of an elastomeric material.

8. The slicer as claimed in claim 1 wherein each of the cutting edges has a keen-edge.
